# FASCICULE DE BREVET EUROPEEN

(11) **EP 0 715 508 B1**
(45) Date de publication et mention de la délivrance du brevet: **15.09.1999**
(21) Numéro de dépôt: 95923420.4
(22) Date de dépôt: 20.06.1995
(51) Int. Cl.: A61C 3/03

(54) **INSTRUMENT POUR LE TRAITEMENT PARODONTIQUE ET METHODE ASSOCIEE**
WERKZEUG FÜR PARODONTISCHE BEHANDLUNG UND VERFAHREN DAZU
INSTRUMENT FOR THE PARODONTAL TREATMENT AND ASSOCIATED METHOD

(30) Priorité: 20.06.1994 IT MI941286
(43) Date de publication de la demande: 12.06.1996
(73) Titulaire: MICRO MEGA INTERNATIONAL MANUFACTURES SA, 25000 Besançon (FR)
(72) Inventeur: GAMBARINI, Gianluca, I-00176 Rome (IT); TRISI, Paolo, I-65132 Pescara (IT); SCARANO, Antonio, I-65010 Collecorvino (IT); BADOZ, Jean-Marie, F-25300 Pontarlier (FR)
(74) Mandataire: Poupon, Michel
(86) Numéro de dépôt international: FR9500820
(87) Numéro de publication internationale: WO9535068

(56) Documents cités:
- EP-A- 0 074 331
- WO-A-89/09572
- FR-A- 2 566 262
- US-A- 4 019 254
- US-A- 4 229 168

## Description

La présente invention se rapporte au domaine des instruments de traitement parodontique et en particulier les instruments permettant l'élimination du tartre simultanément sur la surface radiculaire et sur la paroi de la muqueuse dans les poches parodontales.

WO-A-8909572 décrit un instrument parodontal avec des surfaces abrasives.

Le succès des traitements parodontaux dépend en grande partie de la complète suppression du tartre qui est situé dans les poches parodontales.

Il est connu que les surfaces radiculaires des dents atteintes de parodontolyse en phase active sont recouvertes d'une plaque bactérienne et de tartre dans la profondeur de l'alvéole, raison pour laquelle la surface radiculaire s'avère détériorée et le cément nécrosé. L'élimination de la plaque, du tartre et du cément nécrosé permet de reconstituer un scellement biologique gingival qui maintient l'état sain du parodonte.

Les moyens connus à ce jour sont d'une part des curettes manuelles ou encore des inserts montés sur des pièces à main vibrantes en particulier des scalers ultrasonores. Ces moyens ont pour inconvénients que la rigidité des instruments ne permet pas le traitement des poches parodontales profondes ainsi que le bon nettoyage des furcations. Ce qui contraint le praticien à pratiquer suivant les méthodes classiques de chirurgie parodontale avec découpage de lambeaux.

La présente invention a pour but de fournir des instruments et une méthode de traitement des affections parodontales permettant le traitement des poches parodontales profondes et les zones de furcations sans devoir recourir à la découpe de lambeaux.

Plus précisément, l'invention concerne un instrument de traitement parodontal constitué d'un manche et d'une lame caractérisé en ce que ladite lame possède une partie active présentant deux secteurs, répartis le long de la lame, et situé chacun de part et d'autre d'un plan passant par l'ce de la lame, ces deux secteurs présentant des niveaux d'agressivité différents de telle sorte que, lors du traitement l'instrument étant introduit dans la poche parodontale, le secteur le plus agressif entre en contact avec la surface radiculaire de la dent et l'autre le moins agressif entre en contact avec la muqueuse. Ledit instrument étant par l'intermédiaire de son manche maintenu sur une pièce à main lui imprimant un mouvement de vibration permettant aux deux secteurs de réaliser le décollement du tartre indésirable.

L'instrument de chirurgie dentaire conforme à la présente invention présente l'avantage que, une fois introduit dans l'alvéole parodontale, il peut atteindre des profondeurs inaccessibles aux instruments conformes à la technique connue.

Un autre avantage offert par l'instrument conforme à la présente invention, est le fait que lors de son utilisation, sont traitées simultanément la surface radiculaire d'une part et la paroi muqueuse d'autre part.

D'autres avantages et caractéristiques de l'instrument de chirurgie dentaire conformes à la présente invention, seront mis en évidence pour les spécialistes de la technique, par la description détaillée suivante de deux exemples de réalisation, avec référence au dessin annexé, dans lequel :
- la **figure 1** représente une vue en élévation latérale de l'instrument,
- la **figure 2** représente une vue en élévation latérale, du côté opposé à celle de la figure 1,
- la **figure 3** représente une vue en coupe agrandie le long de la ligne A-A' de la figure 2, et
- la **figure 4** représente une vue en élévation latérale d'un second mode de réalisation de l'instrument,
- la **figure 5** représente une vue en perspective d'une variante de l'invention,
- la **figure 6** représente une vue en coupe agrandie le long de la ligne B-B' de la figure 5.

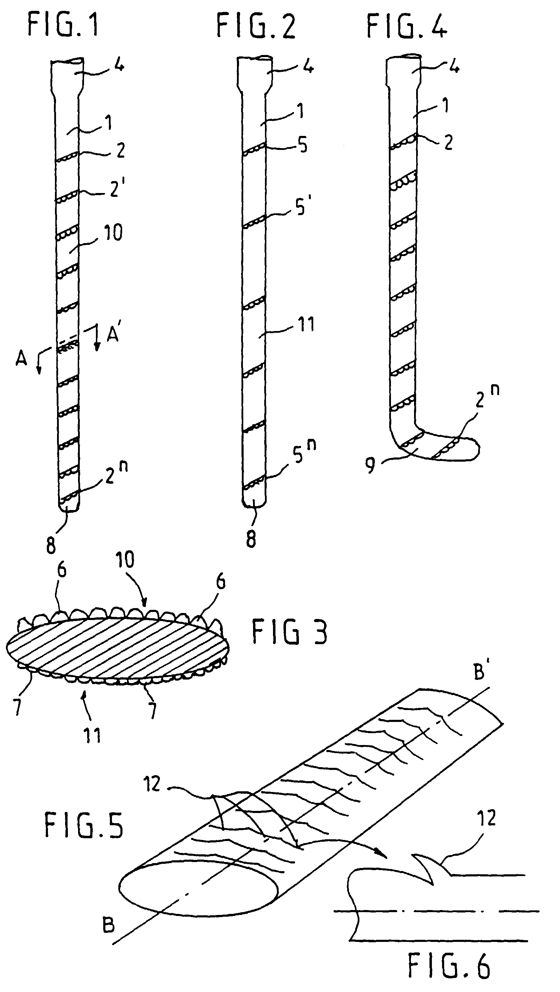

En faisant référence à la figure 1, on peut voir que l'instrument de chirurgie dentaire conforme à la présente invention est constitué essentiellement d'une lame (1) ayant une section sensiblement elliptique, et présentant sur son côté une pluralité de projection mutuellement adjacentes qui lui confèrent la rugosité souhaitée. Ces projections sont disposées sur des lignes parallèles (2,2', etc...) qui sont de préférence inclinées par rapport au plan perpendiculaire à l'axe de l'instrument. Leur inclinaison peut varier entre des limites assez larges, mais peut aussi être nulle.

La distance verticale entre chaque ligne (2) et celle qui lui est adjacente, peut être comprise entre 0,25 et 2 cm, de préférence comprise entre 0,5 et 1 cm.

Les projections qui forment les lignes (2) se projettent latéralement du côté de l'instrument (1), sur environ 0,25 à 0,5 mm, de préférence de 0,05 mm environ.

La lame (1) présente, à une extrémité, l'embout (4) pour le branchement sur l'appareil utilisé pour actionner l'instrument. La longueur totale de cet instrument est analogue à celle des limes endodentaires connues, à savoir d'environ 12 à 25 mm. L'épaisseur de la lame (1) peut être comprise entre 0,1 et 3 mm, sa largeur entre 0,2 et 3,5 mm.
Pour actionner l'instrument, on peut utiliser n'importe quel appareil prévu à cet effet, mais il est préférable d'utiliser des appareils générateurs d'ultrasons. En effet, les vibrations ultrasoniques possèdent des propriétés anti-bactériennes intrinsèques, et sont en même temps capables de détacher des résidus de tartre de la paroi radiculaire. En outre, grâce à ces vibrations, l'appareil est en mesure d'atteindre et de limer, même les zones les plus inaccessibles de l'alvéole, sans léser le tissu conjonctif résiduel qui l'entoure.

En se référant à la figure 2, on peut voir que l'autre côté de la lame (1) présente également une pluralité de lignes parallèles (5,5', etc...) de projections. Pour l'inclinaison de ces lignes, s'applique ce qui vient d'être dit pour les lignes (2,2') etc... en référence à la figure 1. En revanche, il existe des différences, pour ce qui concerne la distance verticale entre les lignes (5,5') et les dimensions des projections. La distance entre une ligne (5) et celle qui y est adjacente, est supérieure à la distance entre les lignes (2), de préférence égale à environ le double. Par contre, les dimensions des projections (7) qui forment les lignes (5) sont plus petites que celles des projections (6) qui forment les lignes (2), elles sont de préférence égales à environ la moitié de ces dernières.

Sur la figure 3 sont mis en évidence les profils des projections (6) qui forment les lignes (2) et les profils des projections (7) qui forment les lignes (5). Les projections (6) ont un profil sensiblement semi-circulaire et elles viennent se raccorder graduellement à la surface de la lame (1). Chacune de ces projections est découpée par usinage au moyen d'un outil approprié dans le côté de la lame (1). Le rayon de chaque demi-cercle est de préférence compris entre 50 et 500 µ environ. Les projections (6) sont destinées, pendant l'utilisation de l'instrument, à entrer en contact avec la surface radiculaire de la dent. La vibration de l'instrument appuyé sur cette surface provoque l'élimination du cément nécrosé de la couche de dentine réduite en boue qui se forme pendant le traitement.

Les projections (7) ont également un profil sensiblement semi-circulaire, tout comme les projections (6) et sont découpées comme ces dernières par usinage au moyen d'un outil approprié dans l'autre côté de la lame (1). Le rayon de ces demi-cercles est de préférence compris entre 25 et 250 µ environ. Ces projections sont destinées, pendant l'utilisation de l'instrument, à entrer en contact avec la surface de la paroi muqueuse des alvéoles parodontales.

La vibration de l'instrument provoque ainsi, non seulement l'élimination du cément nécrosé, mais aussi l'élimination simultanée du tissu granulé de la paroi muqueuse de l'alvéole parodontale. Cette élimination constitue l'un des objectifs d'un bon traitement du parodonte, afin d'obtenir un tissu sain, exempt de bactéries et capable de sceller, par adhérence, la surface radiculaire traitée.

Sur la figure 3, on peut voir également que la section de la lame (1) présente une forme elliptique très aplatie qui permet de préparer les portions plates ou légèrement convexes de la paroi radiculaire. Cette forme aplatie offre également la possibilité de plier l'instrument pendant l'utilisation, de manière à l'adapter aux courbes présentes dans les fourches radiculaires, et rendre possible le traitement de zones de la racine non accessibles par les instruments conformes à la technique connue.

L'instrument conforme à la présente invention peut être réalisé en n'importe quel matériau adapté à cet effet Il est possible par exemple d'utiliser des matériaux en usage dans la fabrication des curettes. Toutefois, il est préférable d'utiliser les alliages de titane récemment introduits dans la fabrication des limes endodontiques.

Sur la figure 4 est représentée une variante du mode de réalisation de la figure 1. En effet, alors que l'instrument représenté sur la figure 1 présente une pointe (8) droite, simplement arrondie, celui objet de la variante sur la figure 4 présente une courbe au sommet (9), analogue à celle des curettes connues, qui permet un nettoyage plus efficace des surfaces radiculaires plates à l'intérieur d'alvéoles plus amples.

La figure 5 représente un autre mode de réalisation des projections qui peuvent prendre la forme de languettes relevées comme des dents (12) du type RISPI (marque déposée) ou SHAPER (marque déposée) au nombre par exemple de trois sur chaque ligne parallèle, leur nombre pouvant varier en fonction des besoins.

D'autres variantes et/ou modifications des modes de réalisation précédemment décrits et illustrés, peuvent être apportées par les spécialistes de la technique sans sortir du cadre de la présente invention. Ces variantes pourraient par exemple concerner la forme de la lame (1) qui, au lieu de la forme droite optimale, pourrait être resserrée en direction de la pointe pour l'adapter à l'utilisation à l'intérieur d'alvéoles gingivales excessivement étroites. De plus, la lame (1) peut prendre toute section appropriée, par exemple elle peut être de section circulaire, oblongue, la lame peut être cylindrique ou conique.

## Revendications

1. Instrument de traitement parodontal constitué d'un manche (4) et d'une lame (1), caractérisé en ce que ladite lame (1) possède une partie active présentant deux secteurs agressifs (10,11) répartis le long de la lame, et situé chacun de part et d'autre d'un plan passant par l'axe de la lame, ces deux secteurs (10,11) présentant des niveaux d'agressivité différents de telle sorte que, lors du traitement l'instrument étant introduit dans la poche parodontale, le secteur le plus agressif entre en contact avec la surface radiculaire de la dent et l'autre le moins agressif entre en contact avec la muqueuse; ledit instrument étant par l'intermédiaire de son manche (4) maintenu sur une pin à main lui imprimant un mouvement de vibration permettant aux deux secteurs (10,11) de réaliser le décollement du tartre indésirable.

2. Instrument de traitement parodontal selon la revendication 1, caractérisé en ce que l'un des secteurs (10) de la lame (1) est un secteur actif et l'autre secteur (11) est un secteur lisse.

3. Instrument de traitement parodontal selon la revendication 1 ou la revendication 2, caractérisé en ce que la lame (1) a une section sensiblement elliptique, pourvue sur l'un des secteurs (10) d'une pluralité de projections (6) adjacentes et disposées en lignes parallèles (2,2') et sur l'autre secteur (11) une pluralité de projections plus petites (7) disposées sur des lignes parallèles (5,5') plus espacées entre elles que les lignes (2,2') susmentionnées.

4. Instrument de traitement parodontal selon l'une quelconque des revendications précédentes, caractérisé en ce que les projections (6) sont des languettes relevées (12).

5. Instrument de traitement parodontal selon l'une quelconque des revendications précédentes, caractérisé en ce que les projections (6) sont des barbelures (12) du type RISPI ou SHAPER;

6. Instrument de traitement parodontal selon l'une quelconque des revendications précédentes, caractérisé en ce que les projections (6) font saillie de 0,05 mm sur le flanc de la lame (1).

7. Instrument de traitement parodontal selon l'une quelconque des revendications précédentes, caractérisé en ce que la distance entre les lignes parallèles (2,2') de projections (6) est comprise entre 0,5 et 1 mm.

8. Instrument de traitement parodontal selon l'une quelconque des revendications précédentes, caractérisé en ce que les lignes parallèles (2,2' ; 5,5') sont inclinées par rapport au plan perpendiculaire à l'axe de l'instrument, et en ce que leur inclinaison est comprise entre 40 et 50°.

9. Instrument de traitement parodontal selon l'une quelconque des revendications précédentes, caractérisé en ce qu'il présente, au niveau de sa pointe, une courbure sommitale (9).

10. Instrument de traitement parodontal, selon l'une quelconque des revendications précédentes, caractérisé en ce que le secteur actif (10) est réalisé sur la partie distale de la lame (1), la pointe de la lame restant inactive.

11. Instrument de traitement parodontal selon l'une quelconque des revendications précédentes, caractérisé en ce que la lame (1) a une section circulaire.

12. Instrument de traitement parodontal selon l'une quelconque des revendications précédentes, caractérisé en ce que la lame (1) a une section oblongue.

13. Instrument de traitement parodontal selon l'une quelconque des revendications précédentes, caractérisé en ce que la lame (1) est cylindrique.

14. Instrument de traitement parodontal selon l'une quelconque des revendications précédentes, caractérisé en ce que la lame (1) est conique.

## Claims

1. Parodontal treatment instrument formed from a handle (4) and a blade (1), characterised in that said blade (1) comprises an active portion having two aggressive sectors (10, 11) distributed along the blade, and each sector is situated on one side of a plane passing through the axis of the blade, these two sectors (10, 11) having different levels of aggressivity so that, when the instrument is introduced into the parodontal cavity during treatment, the more aggressive sector comes into contact with the radicular surface of the tooth and the other less aggressive sector comes into contact with the mucous membrane; said instrument being retained, by means of its handle (4), on a handpiece which imparts to said instrument a movement of vibration permitting the two sectors (10, 11) to effect the removal of the undesirable tartar.

2. Parodontal treatment instrument according to claim 1, characterised in that one of the sectors (10) of the blade (1) is an active sector and the other sector (11) is a smooth sector.

3. Parodontal treatment instrument according to claim 1 or claim 2, characterised in that the blade (1) has a substantially elliptical cross-section which is provided, on one of the sectors (10), with a plurality of adjacent projections (6) disposed in parallel lines (2, 2') and, on the other sector (11), with a plurality of smaller projections (7) disposed on parallel lines (5, 5') which are spaced further apart than the aforementioned lines (2, 2').

4. Parodontal treatment instrument according to any one of the preceding claims, characterised in that the projections (6) are raised tongues (12).

5. Parodontal treatment instrument according to any one of the preceding claims, characterised in that the projections (6) are barbs (12) of the RISPI or SHAPER type.

6. Parodontal treatment instrument according to any one of the preceding claims, characterised in that the projections (6) protrude by 0.05 mm from the side of the blade (1).

7. Parodontal treatment instrument according to any one of the preceding claims, characterised in that the distance between the parallel lines (2, 2') of projections (6) is between 0.5 and 1 mm.

8. Parodontal treatment instrument according to any one of the preceding claims, characterised in that the parallel lines (2, 2'; 5, 5') are inclined relative to the plane perpendicular to the axis of the instrument, and in that their inclination is between 40 and 50°.

9. Parodontal treatment instrument according to any one of the preceding claims, characterised in that it has, at the level of its point, a summital curve (9).

10. Parodontal treatment instrument according to any one of the preceding claims, characterised in that the active sector (10) is provided on the distal portion of the blade (1), the point of the blade remaining inactive.

11. Parodontal treatment instrument according to any one of the preceding claims, characterised in that the blade (1) has a circular cross-section.

12. Parodontal treatment instrument according to any one of the preceding claims, characterised in that the blade (1) has an oblong cross-section.

13. Parodontal treatment instrument according to any one of the preceding claims, characterised in that the blade (1) is cylindrical.

14. Parodontal treatment instrument according to any one of the preceding claims, characterised in that the blade (1) is conical.

## Patentansprüche

1. Vorrichtung zur Behandlung von Parodontitis mit einer Haltestange (4) und einer Klinge (1), dadurch gekennzeichnet, daß die Klinge (1) einen aktiven Bereich mit zwei in Längsrichtung der Klinge unterteilten, aggressiven Abschnitten (10, 11) aufweist, die jeweils auf einer Seite einer durch die Achse der Klinge verlaufenden Ebene angeordnet sind, wobei die Abschnitte (10, 11) unterschiedliche Aggressivitätsgrade aufweisen, so daß die während der Behandlung in eine Zahnfleischtasche eingeführte Vorrichtung mit ihrem aggressivsten Abschnitt in Kontakt mit der Wurzeloberfläche des Zahns und mit dem anderen, weniger aggressiven in Kontakt mit der Schleimhaut tritt, und daß die Vorrichtung an ihrer Haltestange von einem Handstück gehalten ist, das sie zum Entfernen unerwünschten Zahnsteins durch die beiden Abschnitte (10, 11) in eine Schwingungsbewegung versetzt.

2. Vorrichtung zur Behandlung von Parodontitis gemäß Anspruch 1, dadurch gekennzeichnet, daß einer der Abschnitte (10) der Klinge (1) ein aktiver Abschnitt und in der andere Abschnitt (11) ein glatter Abschnitt ist.

3. Vorrichtung zur Behandlung von Parodontitis gemäß Anspruch 1 oder Anspruch 2, dadurch gekennzeichnet, daß die Klinge (1) einen im wesentlichen elliptischen Querschnitt aufweist, daß auf einem der Abschnitte (10) eine Vielzahl von benachbarten, in parallelen Bahnen (2, 2') angeordneten Vorsprüngen vorgesehen ist und der andere Abschnitt (11) eine Vielzahl von kleineren Vorsprüngen (7) aufweist, die auf weiter voneinander beanstandeten, parallelen Bahnen (5, 5') angeordnet sind.

4. Vorrichtung zur Behandlung von Parodontitis gemäß einem der vorhergehenden Ansprüche, dadurch gekennzeichnet, daß die Vorsprünge (6) scharfe Zacken sind.

5. Vorrichtung zur Behandlung von Parodontitis, dadurch gekennzeichnet, daß die Vorsprünge (6) Widerhaken (12) vom Typ RISPI oder SHAPER sind.

6. Vorrichtung zur Behandlung von Parodontitis gemäß einem der vorhergehenden Ansprüche, dadurch gekennzeichnet, daß die Vorsprünge (6) Auskragungen mit 0,05 Millimeter langen Flanken aufweisen.

7. Vorrichtung zur Behandlung von Parodontitis gemäß einem der vorhergehenden Ansprüche, dadurch gekennzeichnet, daß die Entfernung zwischen den parallelen Bahnen (2, 2') der Vorsprünge (6) 0,5 Millimeter bis 1 Millimeter beträgt.

8. Vorrichtung zur Behandlung von Parodontitis gemäß einem der vorhergehenden Ansprüche, dadurch gekennzeichnet, daß die parallelen Bahnen (2, 2'; 5, 5') bezüglich der rechtwinklig zur Achse der Vorrichtung verlaufenden Ebene geneigt sind und daß ihre Neigung 40 Grad bis 50 Grad beträgt.

9. Vorrichtung zur Behandlung von Parodontitis gemäß einem der vorhergehenden Ansprüche, dadurch gekennzeichnet, daß sie im Bereich ihrer Spitze eine Krümmung (9) aufweist.

10. Vorrichtung zur Behandlung von Parodontitis gemäß einem der vorhergehenden Ansprüche, dadurch gekennzeichnet, daß der aktive Abschnitt (10) im distalen Bereich der Klinge (1) ausgebildet ist, wobei die Spitze der Klinge inaktiv bleibt.

11. Vorrichtung zur Behandlung von Parodontitis gemäß einem der vorhergehenden Ansprüche, dadurch gekennzeichnet, daß die Klinge (1) einen kreisförmigen Querschnitt aufweist.

12. Vorrichtung zur Behandlung Von Parodontitis gemäß einem der vorhergehenden Ansprüche, dadurch gekennzeichnet, daß die Klinge (1) einen länglichen Querschnitt aufweist.

13. Vorrichtung zur Behandlung von Parodontitis gemäß einem der vorhergehenden Ansprüche, dadurch gekennzeichnet, daß die Klinge (1) zylindrisch ist.

14. Vorrichtung zur Behandlung von Parodontitis gemäß einem der vorhergehenden Ansprüche, dadurch gekennzeichnet, daß die Klinge (1) kegelförmig ist.
